## Europäisches Patentamt
## European Patent Office
## Office européen des brevets

(11) Publication number: **0 127 715**
**B1**

(12) **EUROPEAN PATENT SPECIFICATION**

(45) Date of publication of patent specification: **25.01.89**

(21) Application number: **83306125.2**

(22) Date of filing: **10.10.83**

�milint. Cl.⁴: **A 21 C 11/20,** A 21 C 9/06,
A 21 C 5/00

(54) Device for forming balls of plastic material.

<table>
<tr><td>(30) Priority: <b>03.06.83 JP 83932/83</b></td><td>(73) Proprietor: <b>RHEON AUTOMATIC MACHINERY<br>CO. LTD.<br>2-3, Nozawa-machi<br>Utsunomiya-shi Tochigi-ken (JP)</b></td></tr>
<tr><td>(43) Date of publication of application:<br><b>12.12.84 Bulletin 84/50</b></td><td></td></tr>
<tr><td>(45) Publication of the grant of the patent:<br><b>25.01.89 Bulletin 89/04</b></td><td>(72) Inventor: <b>Hayashi, Torahiko<br>3-4, Nozawa-machi Utsunomiya-shi<br>Tochigi-ken (JP)</b></td></tr>
<tr><td>(84) Designated Contracting States:<br><b>AT BE CH DE FR GB IT LI LU NL SE</b></td><td>(74) Representative: <b>Leale, Robin George et al<br>FRANK B. DEHN & CO. Imperial House 15-19<br>Kingsway<br>London WC2B 6UZ (GB)</b></td></tr>
<tr><td>(56) References cited:<br><b>US-A-3 572 259<br>US-A-3 988 085<br>US-A-4 251 201</b></td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a device for forming balls of plastic material, consisting for example of filler material such as bean jam, fruit jam, cream, minced meat, chopped vegetables or other materials, encased in an envelope of plastic covering material, such as bread dough, rice dough or other malleable or plastic materials, from a bar formed of a sleeve of such a covering material surrounding a central core of such a filler material. The invention is also applicable to the formation of balls of a single plastic material from a homogeneous bar of such material.

More particularly, the invention is concerned with such a device comprising a pair of similar circular cutters each having an improved cutting means on a peripheral side surface between top and bottom surfaces thereof.

A device hitherto used for formation of balls of the above kind is disclosed in, for example, U.S. Patent No. 3,351,026, or US—A—3572259 and comprises a pair of similar circular cutters, each with top and bottom planar surfaces and a peripheral side surface, which cutters are rotatable about their respective axes disposed vertically and parallel to each other and are arranged at the same level with a predetermined gap therebetween. Each cutter is formed on its peripheral side surface with cutting means which consists of a single spiral blade extending along the peripheral side surface of the cutter, the blade starting at the top of the said peripheral side surface and terminating near the bottom thereof substantially vertically under the starting point of the blade. The edge of the blade is blunt throughout its length and the radius of a surface of revolution formed by the edge of the blade about the vertical axis of the cutter increases gradually from the top to the bottom. In use, the cutters are driven in rotation at the same speed and in the same direction so that the cutting blades meeting in opposition to each other at the said gap are always at the same level. A bar of material is continuously supplied downwardly toward and into the gap between the rotating cutters, and is separated by the cutters to produce successive balls, one ball being obtained for every one revolution of the cutters. It is preferable that the central axis of the bar as supplied to the cutters coincides with a vertical line passing through the middle of the said gap.

An object of the present invention is to provide a device capable of forming a plurality of balls for each revolution of the cutters, thereby to obtain good quality balls of plastic materials with increased production efficiency as compared with the known device described above.

According to the present invention there is provided a device for forming balls of plastic material from a bar of such material, comprising a pair of similar circular cutters each having a peripheral side surface, which cutters are rotatable about their respective axes disposed vertically and parallel to each other and are arranged at the same level with a predetermined gap therebetween, each cutter being formed with cutting means comprising a spiral arcuate blade which extends along the peripheral side surface of the cutter and which has an edge which is blunt throughout the length of the blade, the radius of a surface of revolution formed by the edge of the blade about the vertical axis of each cutter increasing gradually from the top to the bottom, the said cutters being drivable in rotation at the same speed and in the same direction so that the said blades meeting in opposition to each other at the said gap are always at the same level whereby a bar of material supplied downwardly into the said gap is separated by the cutters into successive balls, characterised in that the cutting means of each cutter comprises a plurality of such spiral arcuate blades arranged circumferentially adjacent each other within equi-angular ranges so that each of the said blades starting at or near the top of the peripheral side surface of the cutter terminates at or near the bottom thereof substantially vertically under the starting point of the adjacent blade, whereby for each revolution of the cutters the number of balls produced corresponds to the number of blades on each cutter.

It will thus be readily understood that two or more balls can be produced for every one revolution of the cutters by means of the device of this invention, which has cutters provided with corresponding numbers of arcuate blades.

In a device according to the present invention the length of each spiral arcuate blade is shorter in comparison with that of the known device mentioned above, assuming that they are of the same size, since the cutting means in the device of the invention comprises a plurality of spiral arcuate blades, while the cutting means in the known device comprises a single spiral blade extending around the peripheral side surface of the cutter. Therefore, the area of contact of the cutter blade with the plastic covering material of the bar during the separation of the bar into balls becomes smaller, and accordingly the contact pressure of the blades on the material is correspondingly reduced. As a result, production of good quality balls of plastic material is achieved with less possibility of damage. Such an effect is particularly noticeable when forming relatively small balls.

An embodiment of invention will now be described by way of example and with reference to the accompanying drawings, in which:

Fig. 1 is a partial view, in vertical section, of a device according to the present invention, in combination with a device for forming a composite bar;

Fig. 2 is a diagrammatic view of a surface of revolution formed by the movement of the cutter blade edges of a cutter member of the device of Fig. 1, having two spiral arcuate blades;

Fig. 3 is a diagrammatic view of the changing cross-sectional shape of a cutter blade of the device;

Fig. 4 is a view illustrating the operation of the cutters of the device; and

Fig. 5 is a plan view of a cutter of the device, having two spiral arcuate blades.

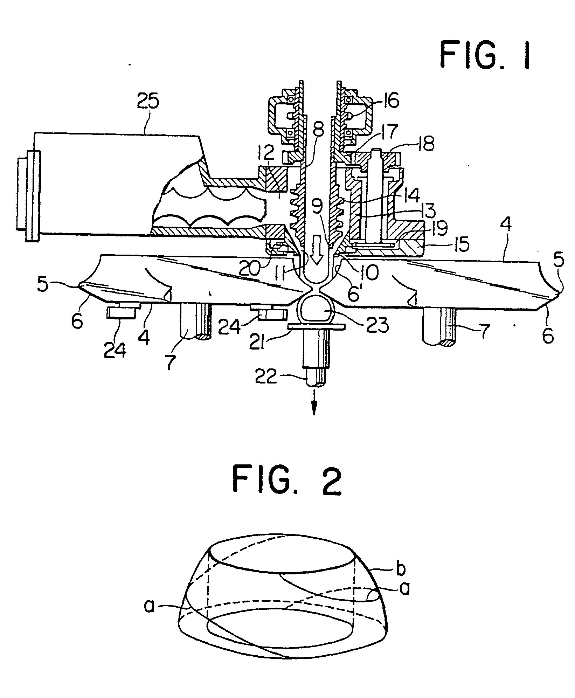

In Fig. 1, a pair of similar circular cutters 4 each with top and bottom planar surfaces and a peripheral side surface, are attached to respective shafts 7 which are rotatable about their respective axes disposed vertically and parallel to each other. The cutters 4 are arranged at the same level, with a predetermined gap therebetween.

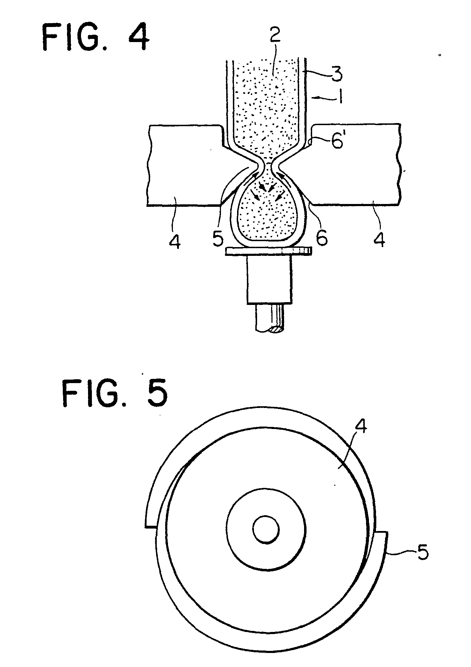

Each cutter 4 is formed with cutting means on its peripheral side surface, which means consists of two spiral arcuate blades 5 extending along the said peripheral side surface of the cutter 4 (see Fig. 5) and arranged within equi-angular ranges so that one of the blades starting at the top of the said peripheral side surface terminates near the bottom of the said surface substantially vertically under the starting point of the other blade 5. The edge of each blade 5 is blunt throughout its length, as will be seen from Fig: 1.

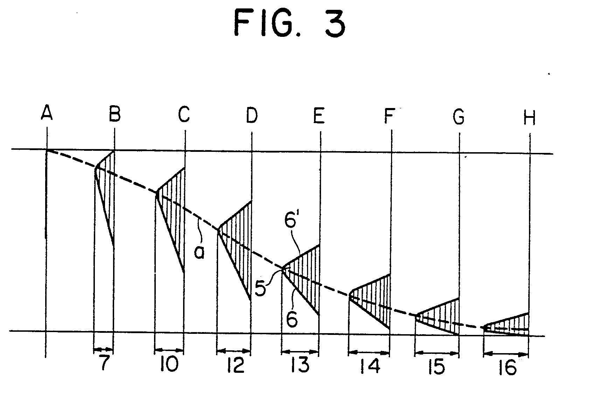

The radius of a surface of revolution formed by the edges of the blades when the cutter 4 is rotated about its axis, increases gradually from the top to the bottom, as shown in Fig 2. The reference letter a in Figs. 2 and 3 shows a helix described by the outermost point of the blade edge. The reference letter b in Fig. 2 shows the above-mentioned surface of revolution.

The underside 6 of each blade 5 is a generally flat surface whose inclination gradually changes from nearly vertical at its top to nearly horizontal at its bottom, as will be seen from Fig. 3, which is a diagrammatic view showing the changing crosssectional shape and position at eight sections (A, B, C, D, E, F, G, H) of a cutter blade 5 taken along the axis of the cutter 4. The numerals inscribed at the lower portion of Fig. 3 show approximate ratios comparing the horizontal heights of the blade at the above-mentioned sections.

The upper side 6' of the blade 5 is preferably shaped to come into contact with a bar 1 only at a region near the blunt edge of the blade 5.

The pair of cutters 4 are rotated at the same speed and in the same direction so that the spiral arcuate blades 5 are always at the same level where they meet in opposition to each other at the said gap. The bar 1 is continuously fed downwardly toward and into the said gap between the rotating cutters 4 with the central axis of the bar 1 being made to coincide with a vertical line passing through the middle of the gap between the cutters.

The bar 1 consists of a sleeve of a covering material 3 surrounding a central core of a filler material 2. The bar can be formed by a known apparatus, shown in Fig. 1, which does not constitute part of the present invention and is described in detail in U.S. Patent No. 3,615,147. Such apparatus will be briefly described merely with reference to its function of moulding the bar 1. Core material 2 is forced from a supply device (not shown) into a rotary hollow pipe 8 which is rotated by a sprocket wheel 16. The pipe 8 imparts rotation to outer surface portions of the core material 2 while supplying it in a steady stream in the direction of cutters 4. Covering material 3 is forced from a supply device 25 through an inlet 12 into a cylinder 13, and is pushed downward in a tubular shape by a helical screw 14 which is attached to the exterior of the pipe 8. Then the covering material 3 passes through an annular aperture 11 defined by a nozzle portion 9 of the pipe 8 and a rotary funnel-shaped ring 10 securely attached to the cylinder 13 by a fixture 15, and envelopes core material 2, thus forming a two-layered bar shape. When passing through the aperture 11, the covering material 3 is given a uniform thickness as well as a rotation exactly equal to that of the outer surface portions of the core material 2, and thus the covering and core materials are forwarded to the cutters 4 as one body.

The above-mentioned ring 10 is formed so that the inner diameter of the upper end thereof is identical to that of the cylinder 13 and the inner diameter of the lower end thereof is larger than that of the nozzle portion 9, to define said annular aperture as mentioned above.

The ring 10 is made to rotate by a gear mechanism comprising a gear 20 integral with the ring 10, a gear 19 meshing with the gear 20, a gear 18 attached to an end of a shaft to the other end of which the gear 19 is secured, and a gear 17 meshing with the gear 18. The gear 17 is integrally secured to the pipe 8.

A receiving dish 21 located under the cutters 4 is adapted to be moved up and down through a shaft 22 which can be operated by a mechanism not shown. Balls 23 completed by the cutters 4 are received by the dish 21 and transferred by pusher means 24 attached to the underside of one of the cutters 4 onto a conveying device such as a belt conveyor (not shown).

Such a discharging mechanism for the completed balls is also generally known and is disclosed fully in U.S. Patents Nos. 3,351,026 and 3,572,259, but the pusher means 24 in the present device has a plurality of pusher arms corresponding to the number of spiral arcuate blades 5 of the cutter 4.

The manner of separation of balls from the bar will be explained briefly hereinbelow.

When the bar 1, fed toward the cutters 4, comes into contact with two of the spiral arcuate blades 5 on the respective cutters, the bar is subjected to a composite rolling and squeezing motion by the pair of opposing blades, whose spiral pattern is such as to reduce the separating gap between the two cutters to a predetermined dimension while descending, so that the bar is gradually constricted inwardly while being twisted. As a result, a top half of the ball is formed, while the upper sides 6' of the blades act to form the bottom half of the subsequent ball. The leading portion of the bar is separated from the rest when the blades reach their lowermost position. Next, the other pair of opposing blades 5 adjacent to the first- mentioned pair are brought into contact with the bar to form a top half of the subsequent ball in the same manner as stated above. This is different from the operation of the cutting means of the aforementioned known device having a single spiral blade in each cutter, in that in the known device the single spiral blade itself functions to form the top half of the subsequent ball in cooperation with its opposing single spiral blade.

While the present invention has been described in connection with a preferred embodiment, it is to be understood that various modifications and improvements can be made therein without departing from the scope of the invention as disclosed in the appended claims. For instance, the number of spiral arcuate blades 5 on each cutter may be more than two. Furthermore, despite the emphasis herein on the formation of balls formed of a covering material surrounding a central core of another material, it should be understood that a device according to the invention may also be used to form balls of a single plastic material from a homogeneous bar of such material.

## Claims

1. A device for forming balls of plastic material from a bar (1) of such material, comprising a pair of similar circular cutters (4) each having a peripheral side surface, which cutters are rotatable about their respective axes disposed vertically and parallel to each other and are arranged at the same level with a predetermined gap therebetween, each cutter being formed with cutting means comprising a spiral arcuate blade (5) which extends along the peripheral side surface of the cutter and which has an edge which is blunt throughout the length of the blade, the radius of a surface of revolution formed by the edge of the blade (5) about the vertical axis of each cutter (4) increasing gradually from the top to the bottom, the said cutters being drivable in rotation at the same speed and in the same direction so that the said blades meeting in opposition to each other at the said gap are always at the same level, whereby a bar (1) of material supplied downwardly into the said gap is separated by the cutters into successive balls, characterised in that the cutting means of each cutter (4) comprises a plurality of such spiral arcuate blades (5) arranged circumferentially adjacent each other within equiangular ranges so that each of the said blades starting at or near the top of the peripheral side surface of the cutter terminates at or near the bottom thereof substantially vertically under the starting point of the adjacent blade, whereby for each revolution of the cutters (4) the number of balls produced corresponds to the number of blades (5) on each cutter.

2. A device according to Claim 1, wherein the underside (6) of each said blade (5) is a generally flat surface whose inclination gradually changes from nearly vertical at its top end to nearly horizontal at its bottom end.

3. A device according to Claim 2, wherein the upper side (6') of each said blade (5) is shaped to come into contact with a said bar (1) only at a region near the blunt edge of the blade.

4. A device according to any of the preceding Claims, wherein the arrangement is such that a bar supplied to the cutters (4) in use has it central axis coincident with a vertical line passing through the middle of the said gap between the cutters.

## Patentansprüche

1. Vorrichtung zum Formen von Bällchen aus plastischem Material aus einem Strang (1) eines solchen Materials, umfassend ein Paar gleichartiger kreisförmiger Messer (4), von denen jedes eine periphere Seitenfläche besitzt, welche Messer um ihre jeweils vertikal und parallel zueinander angeordneten Achsen drehbar sind und mit einem bestimmten Spalt zwischen ihnen in gleicher Höhe angeordnet sind, wobei jedes Messer mit einem Schneidmittel umfassend eine spiralenförmige, gekrümmte Schneide (5), die sich entlang der peripheren Seitenfläche des Messers erstreckt und eine über die Länge der Schneide stumpfe Kante hat, ausgebildet ist, wobei der Radius einer durch die Kante der Schneide (5) um die vertikale Achse jedes Messers (4) gebildeten Rotationsfläche von oben nach unten allmählich zunimmt und die Messer mit derselben Geschwindigkeit und in dieselbe Richtung in Rotation versetzbar sind, sodaß die am Spalt gegenüberliegend zusammentreffenden Schneiden immer in gleicher Höhe sind, wodurch ein nach unten in den Spalt zugeführter Materialstrang (1) mittels der Messer in aufeinanderfolgende Bällchen getrennt wird, dadurch gekennzeichnet, daß das Schneidmittel jedes Messers (4) eine Mehrzahl solcher spiralförmiger gekrümmter Schneiden (5) umfaßt, die um den Umfang innerhalb gleichwinkeliger Bereiche nebeneinander angeordnet sind, sodaß jede bei oder nahe dem oberen Ende der peripheren Seitenfläche des Messers beginnende Schneide bei oder nahe der Basis desselben im wesentlichen vertikal unterhalb des Ausgangspunktes der danebenliegenden Schneide endet, wodurch bei jeder Umdrehung der Messer (4) die Anzahl an erzeugten Bällchen der Anzahl an Schneiden (5) auf jedem Messer entspricht.

2. Vorrichtung nach Anspruch 1, worin die Unterseite (6) jeder Schneide (5) eine im allgemeinen flache Fläche ist, deren Neigung sich von nahezu vertikal an ihrem oberen Ende bis nahezu horizontal an ihrem unteren Ende allmählich verändert.

3. Vorrichtung nach Anspruch 2, worin die Oberseite (6') jeder Schneide (5) so gestaltet ist, daß sie mit einem Strang (1) nur in einem Bereich nahe der stumpfen Kante der Schneide in Kontakt gelangt.

4. Vorrichtung nach einem der vorhergehenden Ansprüche, worin die Anordnung derart ist, daß die Mittelachse eines den in Verwendung befindlichen Messern (4) zugeführten Stranges mit einer durch die Mitte des Spalts zwischen den Messern gehenden vertikalen Linie zusammenfällt.

**Revendications**

1. Dispositif pour former des boulettes d'une matière plastique à partir d'une barre (1) de cette matière, comprenant deux couteaux circulaires similaires (4) ayant chacun une surface latérale périphérique, lesquels couteaux peuvent tourner sur leurs axes respectifs disposés verticalement et parallèles entre eux et sont agencés au même niveau, avec un intervalle prédéterminé entre eux, chaque couteau étant formé avec des moyens coupants comprenant une lame incurvée hélicoïdale (5) qui s'étend le long de la surface latérale périphérique du couteau et qui comporte une arête qui est émoussée sur toute la longueur de la lame, le rayon d'une surface de révolution formée par l'arête de la lame (5) autour de l'axe vertical de chaque couteau (4) augmentant progressivement du haut vers le bas, lesdits couteaux pouvant être entraînés en rotation à la même vitesse et dans le même sens de manière que lesdites lames, se rejoignant en opposition 1 une à l'autre audit intervalle, soient toujours au même niveau, afin qu'une barre (1) de matière introduite vers le bas dans ledit intervalle soit divisée par les couteaux en boulettes successives, caractérisé en ce que les moyens coupants de chaque couteau (4) comprennent un groupe de ces lames incurvées hélicoïdales (5) agencées de façon à être adjacentes circonférentiellement les unes aux autres à l'intérieur d'étendues équiangulaires afin que chacune desdites lames, partant du haut ou du voisinage du haut de la surface latérale périphérique du couteau, aboutisse au bas ou au voisinage du bas de celui-ci, sensiblement verticalement au-dessous du point de départ de la lame adjacente, afin qu'à chaque révolution des couteaux (4), le nombre de boulettes produites corresponde au nombre de lames (5) sur chaque couteau.

2. Dispositif selon la revendication 1, dans lequel la face inférieure (6) de chacune desdites lames (5) est une surface globalement plane dont l'inclinaison varie progressivement d'une orientation presque verticale à son extrémité supérieure à une orientation presque horizontale à son extrémité inférieure.

3. Dispositif selon la revendication 2, dans lequel la face supérieure (6') de chacune desdites lames (5) est configurée de façon à entrer en contact avec ladite barre (1) uniquement dans une zone proche de l'arête émoussée de la lame.

4. Dispositif selon l'une quelconque des revendications précédentes, dans lequel l'agencement est tel qu'une barre fournie aux couteaux (4), lors de l'utilisation, ait son axe central en coïncidence avec une ligne verticale passant par le milieu dudit intervalle entre les couteaux.

## FIG. 1

## FIG. 2

1

# FIG. 3

FIG. 4

FIG. 5